# EUROPEAN PATENT APPLICATION

(11) **EP 3 125 155 A1**
(43) Date of publication of application: **01.02.2017**
(21) Application number: 16180853.0
(22) Date of filing: 22.07.2016
(51) Int. Cl.: G06K 9/00, G06F 3/048, H04M 1/00

(54) **IMAGE-BASED COMMUNICATION METHOD AND DEVICE**

(30) Priority: 29.07.2015 CN 201510454940
(71) Applicant: Xiaomi Inc., Beijing 100085 (CN)
(72) Inventor: WANG, Heng, Haidian District, Beijing 100085 (CN); QIAO, Zhongliang, Haidian District, Beijing 100085 (CN); YU, Jun, Haidian District, Beijing 100085 (CN)
(74) Representative: Reeve, Nicholas Edward

(57) **Abstract**

The present disclosure relates to an image-based communication method and device. The method includes: when presenting a target character image, detecting (101) whether a preset communication triggering condition is satisfied; if detecting that the communication triggering condition is satisfied, determining (102) contact information of a target contact corresponding to the target character image according a preset binding record; and initiating (103, 503, 603) communication with the target contact according to the contact information by calling a preset communication application. The device includes: a detection unit (810), an information determining unit (820), and a communication initiating unit (830).

## Description

### TECHNICAL FIELD

The present disclosure generally relates to technical field of communication, and more particularly, to an image-based communication method and device.

### BACKGROUND

With the rapid development and popularity of smart terminals, such as smart phones, a photographing function of smart terminals is becoming more and more convenient, and the amount of pictures stored in the smart terminals become more and more. When browsing character pictures, if a user needs to contact a person in the picture, the user generally needs to exit a picture browsing application, start a communication application, find out the contact information of this person, and finally initiate communication. Such a process is complicated, and as a result the user experience is poor.

### SUMMARY OF THE INVENTION

In order to solve the problems existing in the related art, the present disclosure provides an image-based communication method and device.

According to a first aspect of embodiments of the present disclosure, there is provided an image-based communication method, including: when presenting a target character image, detecting whether a preset communication triggering condition is satisfied; if detecting that the communication triggering condition is satisfied, determining contact information of a target contact corresponding to the target character image according a preset binding record; and initiating communication with the target contact according to the contact information by calling a preset communication application.

In the present disclosure, the contact information of the target contact corresponding to the target character image can be determined by using the preset binding record, thereby the communication application may be called when the preset communication triggering condition is triggered by the user, and communication may be initiated with the target contact according to the contact information. Through the present disclosure, the user may quickly contact with the person in the image when browsing the image, without performing a series of complicated operations of exiting the image browsing application, starting the communication application, finding out the contact and initiating communication, the process is convenient and quick, the user's operations are greatly reduced, and the user experience is good.

Optionally, the method further includes: uploading an image stored in a terminal to a server; receiving a character image which is recognized from the image uploaded by the terminal and is returned from the server, performing a face recognition on the character image to obtain a face image, and performing a matching on the face image in individual character image by using a face matching algorithm to obtain a matching result, the matching result comprising one or more different faces, and each face corresponding to the matched face image in one or more character images; and configuring a corresponding contact and contact information for each face in the matching result to obtain a binding record in which a corresponding relationship among the character image, the face image, the contact and the contact information is recorded.

In embodiments of the present disclosure, through the server, a character image is determined based on the image uploaded by the terminal, one or more face images are recognized from the determined character image, and face matching is then performed on each recognised face image. In this way, the faces of the same contact may correspond to the matched face images in one or more character images, thereby the operating load of the terminal can be reduced. The terminal can also complete the setting procedure of the binding record only by binding contacts for each recognised face image, thereby the efficiency of setting the binding record is greatly improved.

Optionally, the method further includes: recognizing a character image from an image stored in a terminal; performing a face recognition on the character image to obtain a face image; performing a matching on the face image in individual character image by using a face matching algorithm to obtain a matching result, wherein the matching result includes a plurality of different faces, and each face is corresponding to a matched face image in one or more character images; and configuring a corresponding contact and contact information for each face in the matching result to obtain a binding record in which a corresponding relationship among the character image, the face image, the contact and the contact information is recorded.

In the present disclosure, the character image is recognized from the image stored in the terminal, then the face image is recognized from the character image, and face matching is performed on each face image. In this way, the faces of the same contact may correspond to the matched face images in one or more character images, thereby the setting procedure of the binding record can be completed only by binding contacts for each recognised face, which greatly improves the efficiency of setting the binding record.

Optionally, the configuring the corresponding contact and contact information for each face in the matching result to obtain the binding record in which the corresponding relationship among the character image, the face image, the contact and the contact information is recorded includes: outputting the matching result; receiving an inputted denomination of a target face in the matching result; finding out a name of a target contact which is the same as the denomination from an address book application, wherein the address book application records therein one or more contacts and contact information thereof; and binding a character image and a face image corresponding to the target face with the target contact and the contact information thereof so as to obtain the binding record.

In the present disclosure, each face is denominated and is associated with the contact name in the address book, in this way, the user may quickly set the binding record, the setting procedure is quick and convenient, and the user experience is good.

Optionally, the configuring the corresponding contact and contact information for each face in the matching result to obtain the binding record in which the corresponding relationship among the character image, the face image, the contact and the contact information is recorded includes: outputting the matching result; when receiving a binding request for the target face in the matching result, outputting a contact selection interface, the contact selection interface displaying one or more contacts whose contact information has been recorded in the address book application; receiving a selection instruction to the target contact via the contact selection interface; and binding a character image and a face image corresponding to the target face with the target contact corresponding to the selection instruction and the contact information thereof, so as to obtain the binding record.

In the present disclosure, when the user needs to bind the contact and contact information for the matching result, since the address book has recorded one or more contacts and the contact information thereof, the terminal may output the contact selection interface by calling the address book application, then the user may quickly select corresponding contact and contact information for each group of face image via the contact selection interface, such setting procedure is quick and convenient, and the user experience is good.

Optionally, the detecting whether the preset communication triggering condition is satisfied includes: detecting whether a preset touch event is occurred in a target area of a presenting interface of the target character image, and if yes, determining that the communication triggering condition is satisfied; or detecting whether a communication option outputted by a presenting interface of the target character image is triggered, and if yes, determining that the communication triggering condition is satisfied.

In the present disclosure, whether the communication triggering condition is satisfied may be determined by detecting whether a preset touch event is occurred in a target area in a presenting interface of the target character image, or by detecting whether a communication option outputted by a presenting interface of the target character image, such detection manner is quick and convenient, and the user experience is good.

Optionally, the determining the contact information of the target contact corresponding to the target character image according the preset binding record includes: determining a target face image corresponding to the target area in the target character image, and inquiring a target contact corresponding to the target face image and contact information of the target contact from the binding record; or determining a target face image corresponding to the communication option in the target character image, and inquiring a target contact corresponding to the target face image and contact information of the target contact from the binding record.

In the present disclosure, when determining that the communication triggering condition is satisfied, the target face image may be determined, and the contact information of the contact needing to be communicated and triggered by the user may be quickly found out.

Optionally, the initiating communication with the target contact according to the contact information by calling the preset communication application includes: calling a phone application, and initiating a call to the target contact according to a telephone number of the target contact; or calling a short message (SMS) application, and sending a short message to the target contact according to a telephone number of the target contact; or calling a mail application, and sending an e-mail to the target contact according to a mail address of the target contact; or calling an instant messaging application, and initiating an instant messaging session to the target contact according to an instant messaging application account of the target contact.

In the present disclosure, different communication applications may be set in advance, in this way, when initiating communication to the target contact, there are various communication manners for selection by the user, thereby the user experience is good.

According to a second aspect of embodiments of the present disclosure, there is provided an image-based communication method, including: receiving an image uploaded by a terminal, and recognizing a character image in the image uploaded by the terminal; performing a face recognition on the character image to obtain a face image; performing a matching on the face image in individual character image by using a face matching algorithm to obtain a matching result, the matching result including one or more different faces, and each face corresponding to a matched face image in one or more character images; and returning the matching result to the terminal such that the terminal configures a corresponding contact and contact information for each face in the matching result to obtain a binding record, determines contact information of a target contact corresponding to the target character image according to the binding record, calls a preset communication application, and initiates communication with the target contact according to the contact information.

In the present disclosure, through the server, the character image is screened out, the face image is recognized from the character image, and a face matching is performed on each face image, in this way, the operating load of the terminal can be reduced, and the efficiency of setting the binding record is greatly improved. After the complete of the binding, the contact information of the target contact corresponding to the target character image can be determined, and by calling a preset communication application, communication is initiated to the target contact according to the contact information.

According to a third aspect of embodiments of the present disclosure, there is provided an image-based communication device, including: a detection unit configured to, when presenting a target character image, detect whether a preset communication triggering condition is satisfied; an information determining unit configured to, if detecting that the communication triggering condition is satisfied, determine contact information of a target contact corresponding to the target character image according to a preset binding record; and a communication initiating unit configured to call a preset communication application and initiate communication with the target contact according to the contact information.

In the present disclosure, the contact information of the target contact corresponding to the target character image can be determined by using the preset binding record, thereby the communication application may be called when the preset communication triggering condition is triggered by the user, and communication may be initiated with the target contact according to the contact information. Through the present disclosure, the user may quickly contact with the person in the image when browsing the image, without performing a series of complicated operations of exiting the image browsing application, starting the communication application, finding out the contact and initiating communication, the process is convenient and quick, the user's operations are greatly reduced, and the user experience is good.

Optionally, the device further includes: an uploading unit configured to upload an image stored in a terminal to a server; a receiving unit configured to receive a character image which is recognized from the image uploaded by the terminal and is returned from the server, perform a face recognition on the character image to obtain a face image, and performing a matching on the face image in individual character image by using a face matching algorithm to obtain a matching result, the matching result including one or more different faces, and each face corresponding to a matched face image in one or more character images; and a first configuration unit configured to configure a corresponding contact and contact information for each face in the matching result to obtain a binding record in which a corresponding relationship among the character image, the face image, the contact and the contact information is recorded.

In the present disclosure, through the server, the character image is screened out, the face image is recognized from the character image, and a face matching is performed on each face image, in this way, the faces of the same contact may correspond to the matched face images in one or more character images, thereby the operating load of the terminal can be reduced, and the terminal can complete the setting procedure of the binding record only by binding contacts for each face, thereby the efficiency of setting the binding record is greatly improved.

Optionally, the device further includes: a character recognizing unit configured to recognize a character image from an image stored in a terminal; a face recognizing unit configured to perform a face recognition on the character image to obtain a face image; a face matching unit configured to perform a matching on the face image in individual character image by using a face matching algorithm to obtain a matching result, wherein the matching result includes a plurality of different faces, and each face is corresponding to a matched face image in one or more character images; and a second configuration unit configured to configure a corresponding contact and contact information for each face in the matching result to obtain a binding record in which a corresponding relationship among the character image, the face image, the contact and the contact information is recorded.

In the present disclosure, the character image is recognized from the image stored in the terminal, then the face image is recognized from the character image, and a face matching is performed on each face image, in this way, the faces of the same contact may correspond to the matched face images in one or more character images, thereby the setting procedure of the binding record can be completed only by binding contacts for each face, which greatly improves the efficiency of setting the binding record.

Optionally, the first configuration unit or the second configuration unit includes: a first output subunit configured to output the matching result; a receiving subunit configured to receive an inputted denomination of a target face in the matching result; a finding subunit configured to find out a name of a target contact which is the same as the denomination from an address book application, wherein the address book application records therein one or more contacts and contact information thereof; and a first binding subunit configured to bind a character image and a face image corresponding to the target face with the target contact and contact information thereof so as to obtain the binding record.

In the present disclosure, each face is denominated and is associated with the contact name in the address book, in this way, the user may quickly set the binding record, the setting procedure is quick and convenient, and the user experience is good.

Optionally, the first configuration unit or the second configuration unit includes: a second output subunit configured to output the matching result; a selection interface output subunit configured to, when receiving a binding request for the target face in the matching result, output a contact selection interface, the contact selection interface displaying one or more contacts whose contact information has been recorded in the address book application; an instruction receiving subunit configured to receive a selection instruction to the target contact via the contact selection interface; and a second binding subunit configured to bind a character image and a face image corresponding to the target face with the target contact corresponding to the selection instruction and the contact information thereof, so as to obtain the binding record.

In the present disclosure, when the user needs to bind the contact and contact information for the matching result, since the address book has recorded therein one or more contacts and the contact information thereof, the terminal may output the contact selection interface by calling the address book application, then the user may quickly select corresponding contact and contact information for each group of face image via the contact selection interface, such setting procedure is quick and convenient, and the user experience is good.

Optionally, the detection unit includes any one of the following subunits: a first detection subunit configured to detect whether a preset touch event is occurred in a target area of a presenting interface of the target character image, and if yes, determine that the communication triggering condition is satisfied; and a second detection subunit configured to detect whether a communication option outputted by a presenting interface of the target character image is triggered, and if yes, determine that the communication triggering condition is satisfied.

In the present disclosure, whether the communication triggering condition is satisfied may be determined by detecting whether a preset touch event is occurred in a target area in a presenting interface of the target character image, or by detecting whether a communication option outputted by a presenting interface of the target character image, such detection manner is quick and convenient, and the user experience is good.

Optionally, the information determining unit includes any one of the following subunits: a first inquiring subunit configured to determine a target face image corresponding to the target area in the target character image, and inquire a target contact corresponding to the target face image and contact information of the target contact from the binding record; and a second inquiring subunit configured to determine a target face image corresponding to the communication option in the target character image, and inquire a target contact corresponding to the target face image and contact information of the target contact from the binding record.

In the present disclosure, when determining that the communication triggering condition is satisfied, the target face image may be determined, and the contact information of the contact needing to be communicated and triggered by the user may be quickly found out.

Optionally, the communication initiating unit includes any one of the following subunits: a call initiating subunit configured to call a phone application, and initiate a call to the target contact according to a telephone number of the target contact; a short message sending subunit configured to call a short message application, and send a short message to the target contact according to a telephone number of the target contact; a mail sending subunit configured to call a mail application, and send an e-mail to the target contact according to a mail address of the target contact; and a session initiating subunit configured to call an instant messaging application, and initiate an instant messaging session to the target contact according to an instant messaging application account of the target contact.

In the present disclosure, different communication applications may be set in advance, in this way, when initiating communication to the target contact, there are various communication manners for selection by the user, thereby the user experience is good.

According to a fourth aspect of embodiments of the present disclosure, there is provided an image-based communication device, including: an image receiving and recognizing unit configured to receive an image uploaded by a terminal, and recognize a character image in the image uploaded by the terminal; a face recognizing unit configured to perform a face recognition on the character image to obtain a face image; a face matching unit configured to perform a matching on the face image in individual character image by using a face matching algorithm to obtain a matching result, the matching result including one or more different faces, and each face corresponding to a matched face image in one or more character images; and a returning unit configured to return the matching result to the terminal such that the terminal configures a corresponding contact and contact information for each face in the matching result to obtain a binding record, determines contact information of a target contact corresponding to the target character image according to the binding record, calls a preset communication application, and initiates communication with the target contact according to the contact information.

In the present disclosure, through the server, the character image is screened out, the face image is recognized from the character image, and a face matching is performed on each face image, in this way, the operating load of the terminal can be reduced, and the efficiency of setting the binding record is greatly improved. After the complete of the binding, the contact information of the target contact corresponding to the target character image can be determined, and by calling a preset communication application, communication is initiated to the target contact according to the contact information.

According to a fifth aspect of embodiments of the present disclosure, there is provided an image-based communication device, including: a processor; and a memory for storing instructions executable by the processor; wherein the processor is configured to: when presenting a target character image, detect whether a preset communication triggering condition is satisfied; if detecting that the communication triggering condition is satisfied, determine contact information of a target contact corresponding to the target character image according a preset binding record; and initiate communication with the target contact according to the contact information by calling a preset communication application.

The present invention also provides a computer program, which when executing on a processor of a terminal, performs the above method.

The present invention also provides a computer program, which when executing on a processor of a server, performs the above method.

In the present disclosure, the contact information of the target contact corresponding to the target character image can be determined by using the preset binding record, thereby the communication application may be called when the preset communication triggering condition is triggered by the user, and communication may be initiated with the target contact according to the contact information. Through the present disclosure, the user may quickly contact with the person in the image when browsing the image, without performing a series of complicated operations of exiting the image browsing application, starting the communication application, finding out the contact and initiating communication, the process is convenient and quick, the user's operations are greatly reduced, and the user experience is good.

According to a sixth aspect of embodiments of the present disclosure, there is provided an image-based communication device, including: a processor; and a memory for storing instructions executable by the processor; wherein the processor is configured to: receive an image uploaded by a terminal, and recognize a character image in the image uploaded by the terminal; perform a face recognition on the character image to obtain a face image; match the face image in individual character image by using a face matching algorithm to obtain a matching result, the matching result including one or more different faces, and each face corresponding to a matched face image in one or more character images; and return the matching result to the terminal such that the terminal configures a corresponding contact and contact information for each face in the matching result to obtain a binding record, determines contact information of a target contact corresponding to the target character image according to the binding record, calls a preset communication application, and initiates communication with the target contact according to the contact information.

In the present disclosure, through the server, the character image is screened out, the face image is recognized from the character image, and a face matching is performed on each face image, in this way, the operating load of the terminal can be reduced, and the efficiency of setting the binding record is greatly improved. After the complete of the binding, the contact information of the target contact corresponding to the target character image can be determined, and by calling a preset communication application, communication is initiated to the target contact according to the contact information.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of an image-based communication method, according to an exemplary embodiment of the present disclosure.
Fig. 2A is a flow chart of another image-based communication method, according to an exemplary embodiment of the present disclosure.
Fig. 2B is a schematic diagram of recognizing two face images from a character image, according to an exemplary embodiment of the present disclosure.
Fig. 3 is a flow chart of further another image-based communication method, according to an exemplary embodiment of the present disclosure.
Fig. 4A is a flow chart of still another image-based communication method, according to an exemplary embodiment of the present disclosure.
Fig. 4B is a schematic diagram that the terminal outputs a matching result for the user to configure the contact, according to an exemplary embodiment of the present disclosure.
Fig. 5A is a flow chart of still further another image-based communication method, according to an exemplary embodiment of the present disclosure.
Fig. 5B is a schematic diagram of presenting a target character image, according to an exemplary embodiment of the present disclosure.
Fig. 6A is a flow chart of still further another image-based communication method, according to an exemplary embodiment of the present disclosure.
Fig. 6B is a schematic diagram of presenting a target character image, according to an exemplary embodiment of the present disclosure.
Fig. 7 is a flow chart of still further another image-based communication method, according to an exemplary embodiment of the present disclosure.
Fig. 8 - Fig. 13 are block diagrams illustrating an image-based communication device, according to an exemplary embodiment of the present disclosure.
Fig. 14 is a block diagram illustrating a device for image-based communication, according to an exemplary embodiment of the present disclosure.
Fig. 15 is a block diagram illustrating another device for image-based communication, according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

The terms used in the present disclosure only tend to depict specific embodiments, rather than restricting the present disclosure. Unless the exceptional case in which the context clearly gives supports, the singular forms "a", "an", and "the" used in the present disclosure and the accompanying claims are intended to include the plural forms. It should also be appreciated that the expression "and/or" used herein indicates including any and all possible combinations of one or more of the listed associated items.

It should be understood, although terms first, second, third and the like are used in the present disclosure to depict various information, such information is not restricted by these terms. These terms are only used to distinguish information of the same type from each other. For example, without departing from the scope of the present disclosure, the first information may also be referred to as the second information. Similarly, the second information may also be referred to as the first information. Depending on context, the word "if" used herein may be explained to "when" or "upon" or "in response to determination that...".

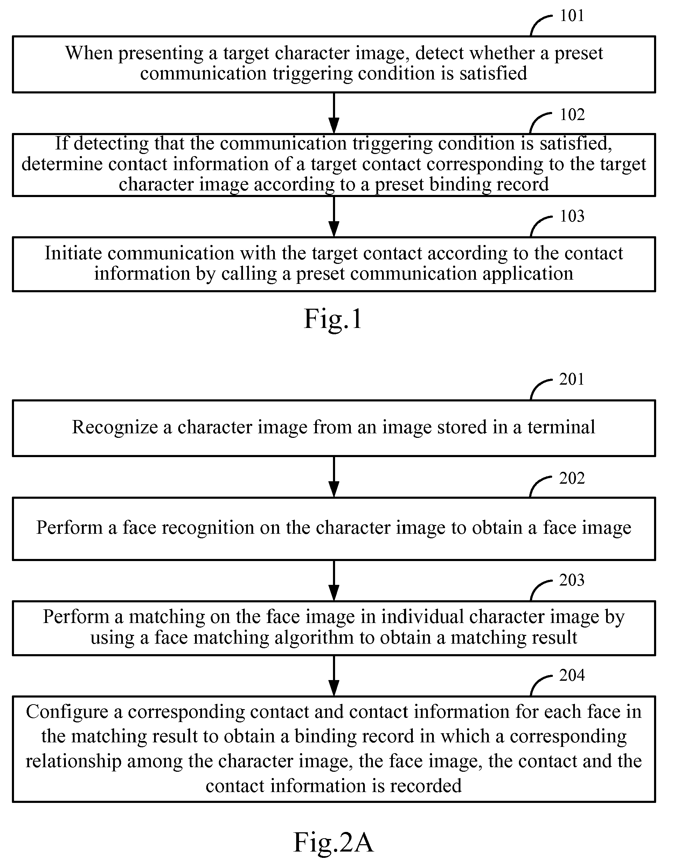

Fig. 1 is a flow chart of an image-based communication method, according to an exemplary embodiment of the present disclosure. The method may be applied in a terminal, and includes the following steps.

In step 101, when presenting a target character image, whether a preset communication triggering condition is satisfied is detected.

In step 102, if detecting that the communication triggering condition is satisfied, contact information of a target contact corresponding to the target character image is determined according to a preset binding record.

In step 103, communication with the target contact is initiated according to the contact information by calling a preset communication application.

In the embodiments of the present disclosure, the terminal may be a smart terminal, such as a smart mobile phone, a tablet, a PDA (Personal Digital Assistant), an e-book reader, and a multimedia player. After a terminal user captures images via the smart terminal, these images will be saved in a photo gallery, and when clicking a photo gallery application icon on an application interface, the terminal user may enter the photo gallery so as to browse the captured images.

When browsing images in which a person exists, especially browsing pictures of family and friends with close relationships, the user may be eager for contacting this person immediately. At this time, the common process manner is that: the user needs to exit the picture browsing program, open the communication application, such as a phone application, a short message application or an instant messaging application, finds out the contact information of this person, and then initiate communication.

However, in the embodiments of the present disclosure, the contact information of the target contact corresponding to the target character image can be determined by using the preset binding record, thereby the communication application may be called when the preset communication triggering condition is triggered by the user, and communication may be initiated with the target contact according to the contact information. Through the present disclosure, the user may quickly contact with the person in the image when browsing the image, without performing a series of complicated operations of exiting the image browsing application, starting the communication application, finding out the contact and initiating communication, the process is convenient and quick, the user's operations are greatly reduced, and the user experience is good.

Generally, the terminal may store many character images, such as photos that the user has taken or received, which include images of one or more people such as family and friends, who are contacts, or who are to be added as contacts. In this context, "character image" is intended to mean a picture featuring one or more people. However, the user may capture a plurality of different character images or photos for the same person, thus there is a situation in which multiple character images show or correspond to the same possible contact. In addition, one or more people (characters) may be captured in a character image, thus there is a situation in which different face images in one character image correspond to different contacts. In actual applications, the user may browse each character image, configure the contact for each face image in each character image, so as to complete the binding of the face image and the contact in advance, and complete the setting procedure of the binding record.

In order to quickly bind the contact information of the corresponding contact for each face image in a plurality of character images, it is possible to recognize an image corresponding to the same face from a plurality of images. The recognition procedure may be performed by the terminal, or may be performed by the server.

First manner: the recognition is performed by the terminal.

Fig. 2A is a flow chart of an image-based communication method, according to an exemplary embodiment. As shown in Fig. 2A, the method may be applied in a terminal, and on the basis of the above-mentioned embodiments, the method describes a process of recognizing an image corresponding to the same face by the terminal, and the method includes the following steps.

In step 201, a character image is recognized from an image stored in a terminal.

In step 202, face recognition is performed on the character image to obtain one or more candidate face images.

In step 203, matching is performed on the face image in the individual character image by using a face matching algorithm to obtain a matching result. The matching result includes a plurality of different faces, and each face is corresponding to a matched face image in one or more character images.

In step 204, a corresponding contact and contact information are configured for each face in the matching result to obtain a binding record in which a corresponding relationship among the character image, the face image, the contact and the contact information is recorded.

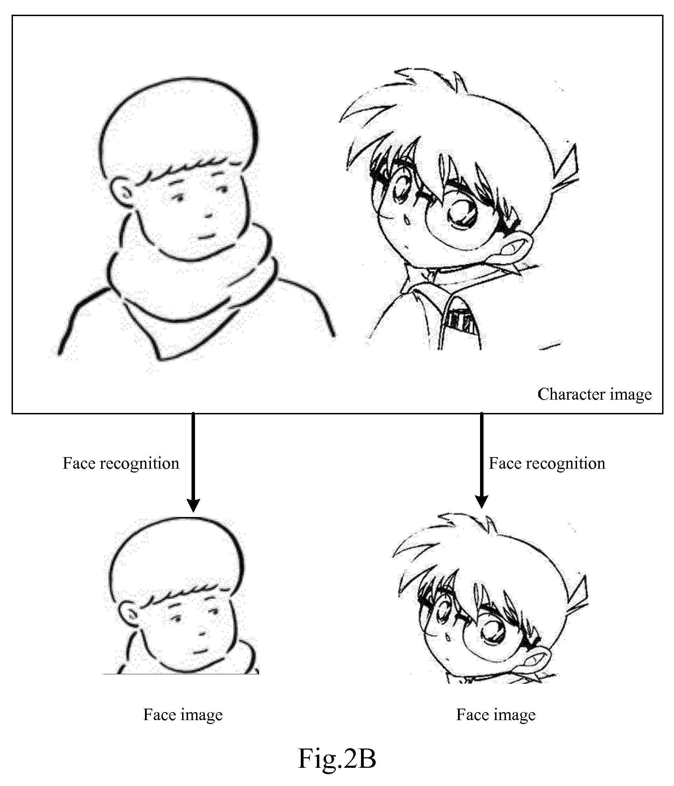

In the embodiments of the present disclosure, generally, there are many images stored in the terminal, the images may include many kinds of images, such as character images, and landscape images without people or characters. Several face recognition algorithms may be preset in the terminal for recognizing and selecting or screening out character images from the images first, and then recognizing face images from the character images. These face recognition algorithms may be existing algorithms in the related art, such as a face recognition algorithm based on principal component analysis, or a face recognition algorithm based on singular value decomposition, or a face recognition algorithm based on the hidden Markov model. When the terminal captures a character image, the above-mentioned face recognition algorithm may be called to recognize the image so as to obtain a face image. For example, as shown in Fig. 2B, which is a schematic diagram illustrating that two face images are detected in a character image, after recognizing the face image, a position of the face image in the character image may be recorded, or each face image may be labelled or denominated, so as to uniquely identify the face image in the binding record. It should be noted, the specific procedure of performing a face recognition on the image via the face recognition algorithm may be referred to recognition process in the related art, which is not elaborated in the embodiments of the present disclosure.

One or more face images are detected or recognized from the plurality of character images, then it is necessary to recognize a plurality of face images corresponding to the same person. Since the same person has the same face, if a plurality of character images are captured for the same person, multiple face images corresponding to the same face may be recognized. In the embodiments of the present disclosure, a face matching method may be adopted to perform face matching on the recognised face images to determine whether the matched face images correspond to the face of the same contact. In the present embodiment, several face matching algorithms may be preset in the terminal, and the matching method may specifically be: a geometric matching algorithm based on eye coordinates, a matching method based on SIFT features, or a template matching method based on statistics characteristics. It should be noted, the specific procedure of performing a face matching on the face images via the face matching method may be referred to the matching procedures in the related art, which is not elaborated in the embodiments of the present disclosure.

Through the above-mentioned face recognition procedure and face matching procedure, the obtained matching result contains a plurality of different matched faces, each face corresponds to the matched face image in one or more character images, i.e., one or more face images matched by each face are determined to correspond to the same contact. Then only by configuring the contact and contact information for each face, a binding record in which a corresponding relationship among the character image, a face image, the contact and contact information is recorded may be obtained.

In the embodiments of the present disclosure, character images are recognized or detected in the images stored in the terminal, in other words certain photos are determined as containing people or characters rather than landscape for example. Then one or more face images are detected in or recognized from the character image, and face matching is performed on each face image. In other words, detected faces in different images are attempted to be matched with one another to determine similarities. In this way, the face of the same contact may correspond to the matched face images in one or more character images. Further, if the contact has a matching face image already associated with the contact and stored in the terminal then the matched face images in the images can be matched to a contact. Thereby the setting procedure of the binding record can be completed only by binding the contact for each face, which greatly improves the efficiency of setting the binding record.

Second manner: the recognition is performed by the server.

In the embodiments of the present disclosure, the method may further include the following steps.

An image stored in a terminal is uploaded to a server.

A character image which is recognized from the image uploaded by the terminal and is returned from the server is received, a face recognition is performed on the character image to obtain a face image, and a matching is performed on the face image in individual character image by using a face matching algorithm to obtain a matching result, the matching result including one or more different faces, and each face corresponding to the matched face image in one or more character images.

A corresponding contact and contact information are configured for each face in the matching result to obtain a binding record in which a corresponding relationship among the character image, the face image, the contact and the contact information is recorded. This step may be carried out by the user of the terminal manually configuring for the matched faces detected from the one or more character images, the appropriate contact information.

In the embodiments of the present disclosure, the terminal may upload the image stored therein to the server, and then the server performs the face recognition and the face matching. The procedure of the face recognition and the face matching by the server may be referred to the procedure of the embodiments of the above-mentioned manner, which is not elaborated in the present embodiment. After recognition, the server may return the matching result to the terminal, and the terminal configures the contact and the contact information for each face in the matching result, in this way, the binding record in which a corresponding relationship among the character image, the face image, the contact and the contact information is recorded may be obtained

In the embodiments of the present disclosure, through the server, the character image is screened out, the face image is recognized from the character image, and a face matching is performed on each face image, in this way, the face of the same contact may correspond to the matched face images in one or more character images, thereby the operating load of the terminal can be reduced, and the terminal can complete the setting procedure of the binding record only by binding contacts for each face, thereby the efficiency of setting the binding record is greatly improved.

When configuring the contact and the contact information for the matching result, the terminal may output the above-mentioned matching result for inspection by the user, and then the user sets the corresponding contact and contact information for each face.

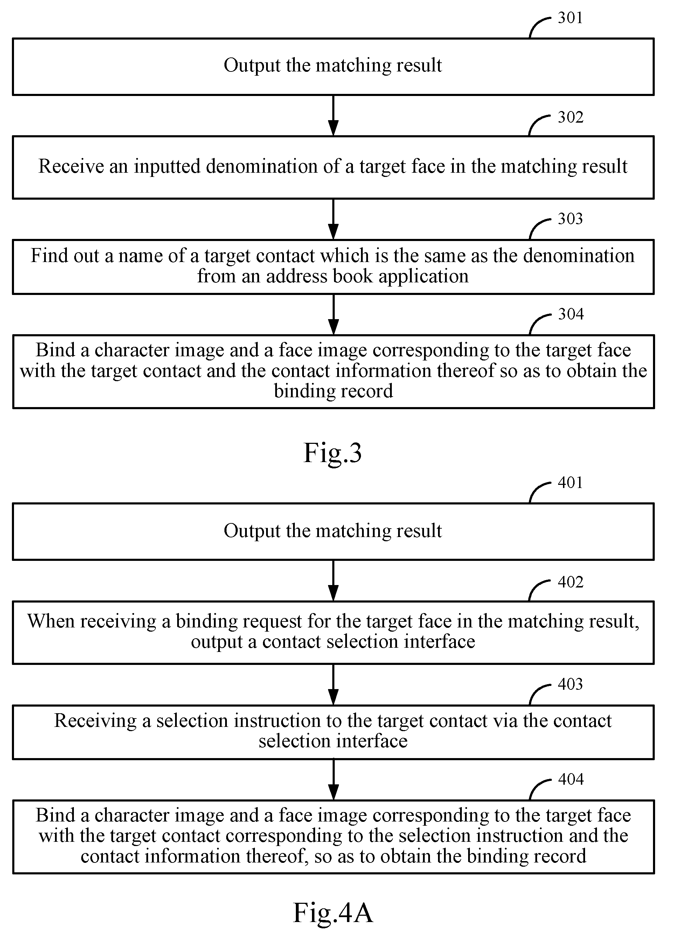

Fig. 3 is a flow chart of an image-based communication method, according to an exemplary embodiment of the present disclosure. As shown in Fig. 3, the method may be applied in a terminal, and on the basis of the above-mentioned embodiments, the method describes a process of configuring the corresponding contact and contact information for each face in the matching result so as to obtain a binding record in which a corresponding relationship among the character image, the face image, the contact and the contact information is recorded. The method includes the following steps.

In step 301, the matching result is outputted.

In step 302, an inputted denomination of a target face in the matching result is received.

In step 303, a name of a target contact which is the same as the denomination is found out from an address book application, wherein the address book application records therein one or more contacts and contact information thereof

In step 304, a character image and a face image corresponding to the target face are bound with the target contact and the contact information thereof so as to obtain the binding record.

In the embodiments of the present disclosure, the user may inquire the matching result outputted by the terminal, and denominate each face in the matching result, since one or more contacts and contact information thereof have been recorded in the address book, a name of a target contact which is the same as the denomination may be found out from the address book according to the denomination of the face, so as to achieve setting of the binding record. In the embodiments of the present disclosure, each face is denominated, and is associated with the name of the contact in the address book, thereby the user may quickly set the binding record, the setting procedure is quick and convenient, and the user experience is good.

Fig. 4A is a flow chart of an image-based communication method, according to an exemplary embodiment of the present disclosure. As shown in Fig. 4A, the method may be applied in a terminal, and on the basis of the above-mentioned embodiments, the method describes a process of configuring the corresponding contact and contact information for each face in the matching result so as to obtain a binding record in which a corresponding relationship among the character image, the face image, the contact and the contact information is recorded. The method includes the following steps.

In step 401, the matching result is outputted.

In step 402, when receiving a binding request for the target face in the matching result, a contact selection interface is outputted, wherein the contact selection interface displays one or more contacts whose contact information has been recorded in the address book application.

In step 403, a selection instruction to the target contact is received via the contact selection interface.

In step 404, a character image and a face image corresponding to the target face are bound with the target contact corresponding to the selection instruction and the contact information thereof, so as to obtain the binding record.

In the embodiments of the present disclosure, when the user needs to bind the contact and the contact information for the matching result, since one or more contacts and contact information thereof have been recorded in the address book, the terminal may output a contact selection interface by calling an address book application, then the user may quickly select corresponding contact and contact information for each group of the face images via the contact selection interface, the setting procedure is quick and convenient, and the user experience is good.

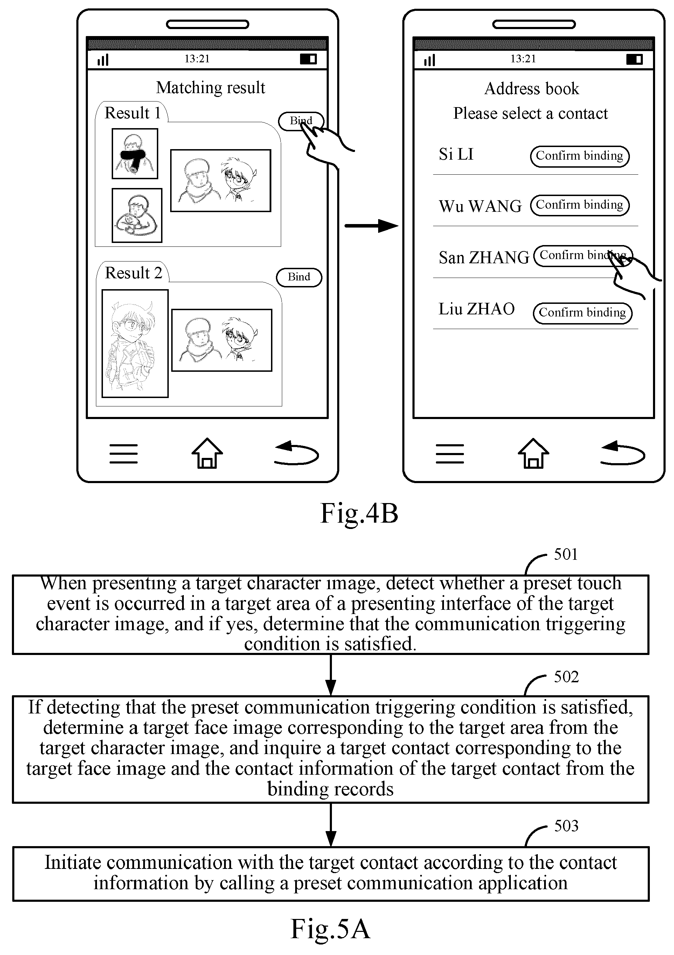

Fig. 4B is a schematic diagram illustrating that the terminal outputs a matching result for the user to configure the contact, according to the present disclosure. The matching result shown in Fig. 4B includes two faces respectively corresponding to two contacts. In actual applications, a binding button may be provided at the right side of the matching result shown in Fig. 4B. When the user wants to bind the contact and the contact information for the matching result, the user may click the binding button to trigger a binding request, then the terminal outputs a contact selection interface acquired by calling an address book application. The contact selection interface in Fig. 4B shows four contacts whose contact information has been recorded. The user may select a binding confirm button at the right side of the contact in Fig. 4B to trigger a selection instruction, then the terminal may record the contact information of the contact which is selected by the user, so as to complete the binding procedure of this group of the face images.

In the embodiments of the present disclosure, the corresponding relationship among the character image, the face image, the contact and the contact information may be recorded in the binding record, and the terminal may store the binding record by using a data table. The character image may be recorded by using a name of the character image in the terminal, or may be identified by using other digitals, characters or Chinese, as long as individual character image may be uniquely identified from the binding record. Similarly, the face image may be uniquely identified according to needs, and the contact and the contact information may be recorded by using the address book application. In actual applications, the binding record may record other information, such as positions of the face images in the character images, and preferred communication manner of the contacts.

As shown in the following table 1, the binding records shown in the table are as follows.

**Table 1**

| No. | Character image | Face image | Contact | Phone | Mail | MiTalk account |
|---|---|---|---|---|---|---|
| 1 | J110 | 101 | San ZHANG | 66661111 | zhsan@xiaomi.com | 7771111 |
| 2 | J110 | 102 | Si LI | 66662222 | lisi@xiaomi.com | 7772222 |
| 3 | J120 | 201 | Si LI | 66662222 | lisi@xiaomi.com | 7772222 |
| 4 | J120 | 202 | Wu WANG | 66663333 | wwu@xiaomi.com | 7773333 |

As can be seen from table 1, two character images (character image J110 and character image J120) are recorded in the binding records, the character image J110 contains two face images, which are identified by 101 and 102 respectively, and are corresponding to San ZHANG and Si LI respectively via the user's configuration, and the contact information acquired according to the address book application are phone, mail and MiTalk account; the character image J120 contains two face images, which are identified by 201 and 202 respectively, and are corresponding to Si LI and Wu WANG respectively via the user's configuration, and the contact information acquired according to the address book application are phone, mail and MiTalk account.

Fig. 5A is a flow chart of still further another image-based communication method, according to an exemplary embodiment of the present disclosure. As shown in Fig. 5A, the method may be applied in a terminal, and on the basis of the above-mentioned embodiments, the method describes a process of detecting whether a preset communication triggering condition is satisfied. The method includes the following steps.

In step 501, when presenting a target character image, whether a preset touch event is occurred in a target area of a presenting interface of the target character image is detected, and if yes, it is determined that the communication triggering condition is satisfied.

In step 502, if detecting that the preset communication triggering condition is satisfied, a target face image corresponding to the target area is determined from the target character image, and a target contact corresponding to the target face image and the contact information of the target contact are inquired from the binding record.

In step 503, communication with the target contact is initiated according to the contact information by calling a preset communication application.

In the embodiments of the present disclosure, the target area may be set at arbitrary position of the presenting interface of the target character image in advance, since the target character image contains one or more target face images, there may be one or more corresponding target areas. When setting the target area in advance, the position of the target area may be determined according to the position of the target face image in the target character image. In actual applications, the person skilled in the art can flexibly set the position according to actual needs, as long as each target area corresponds to each target face image, which is not restricted by the present embodiment.

The touch event may be a click event, a double click event, a swipe event, etc. The person skilled in the art can flexibly select the above-mentioned target area and the touch event according to needs, which is not restricted by the embodiments of the present disclosure.

After determining that the communication triggering condition is satisfied, a target face image corresponding to the target area is determined in the target character image, the target contact corresponding to the target face image and the contact information of the target contact are inquired from the binding record, and the preset communication application is called to initiate communication with the target contact according to the contact information.

In an optional implementation manner, the initiating communication with the target contact according to the contact information by calling the preset communication application includes: calling a phone application, and initiating a call to the target contact according to a telephone number of the target contact; or calling a short message application, and sending a short message to the target contact according to a telephone number of the target contact; or calling a mail application, and sending an e-mail to the target contact according to a mail address of the target contact; or calling an instant messaging application, and initiating an instant messaging session to the target contact according to an instant messaging application account of the target contact.

It can be known from the above-mentioned embodiments, the embodiments of the present disclosure may preset different communication applications, and when initiating communication with the target contact, there are various communication manners for selection by the user, thereby the user experience is good.

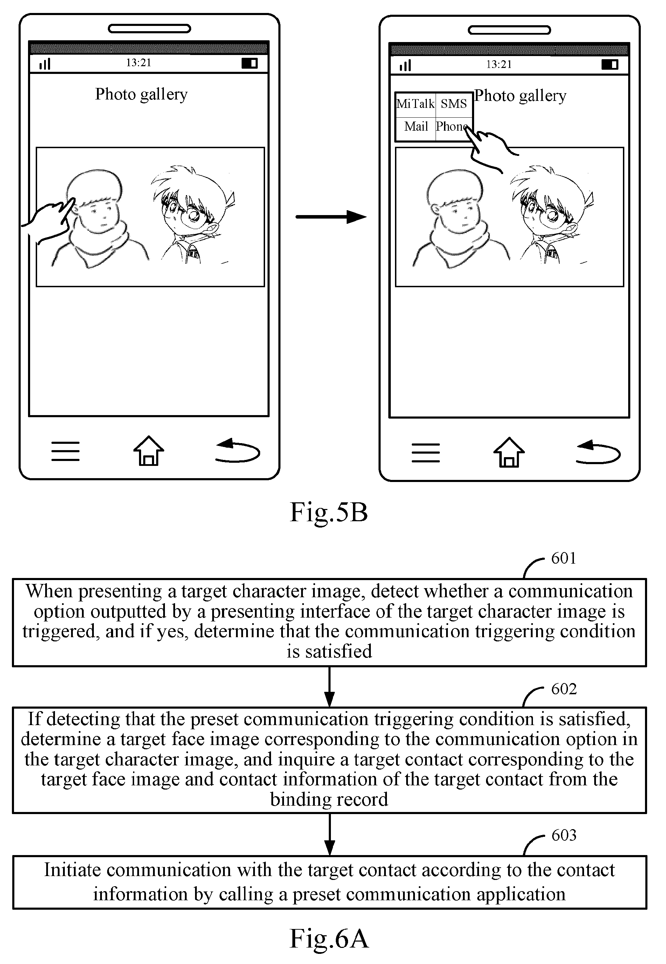

Fig. 5B is a schematic diagram of presenting a target character image, according to the present disclosure. As shown in Fig. 5B, the character image includes two face images, and according to the preset binding record, the two face images are respectively corresponding to San ZHANG and Si LI. The target area in the present embodiment is set to be a position of the face image, the touch event is a double click event, and when detecting that the user double clicks the face image at the left side of the character image, the double click event is occurred, then it is determined that the communication triggering condition is satisfied. According to the preset binding record, the face image at the left side corresponds to San ZHANG, the contact information thereof includes phone, mail, and MiTalk account, at this time, it may be set by default that the call is initiated via the phone application, or a communication manner selection menu may be outputted on the interface, a plurality of preset communication applications are displayed in the menu, and the user may select his/her needed communication manner to initiate communication with San ZHANG.

Fig. 6A is a flow chart of an image-based communication method, according to an exemplary embodiment of the present disclosure. As shown in Fig. 6A, the method may be applied in a terminal, and on the basis of the above-mentioned embodiments, the method describes another process of detecting whether a preset communication triggering condition is satisfied. The method includes the following steps.

In step 601, when presenting a target character image, whether a communication option outputted by a presenting interface of the target character image is triggered is detected, and if yes, it is determined that the communication triggering condition is satisfied.

In step 602, if detecting that the preset communication triggering condition is satisfied, a target face image corresponding to the communication option is determined in the target character image, and a target contact corresponding to the target face image and contact information of the target contact are inquired from the binding record.

In step 603, communication with the target contact is initiated according to the contact information by calling a preset communication application.

In the embodiments of the present disclosure, the communication option may be set at arbitrary position of the presenting interface of the target character image, since the target character image contains one or more target face images, there may be one or more corresponding communication options. When setting the communication option in advance, the position of the communication option may be determined according to the position of the target face image in the target character image, for example, the position of the face image in the target character image, or the position at the left side or right side of the face image. In actual applications, the person skilled in the art may flexibly set the position according to actual needs, as long as each communication option corresponds to each target face image, which is not restricted by the present embodiment.

After determining that the communication triggering condition is satisfied, the target face image corresponding to the communication option is determined in the target character image, and the target contact corresponding to the target face image and the contact information of the target contact are inquired from the binding record.

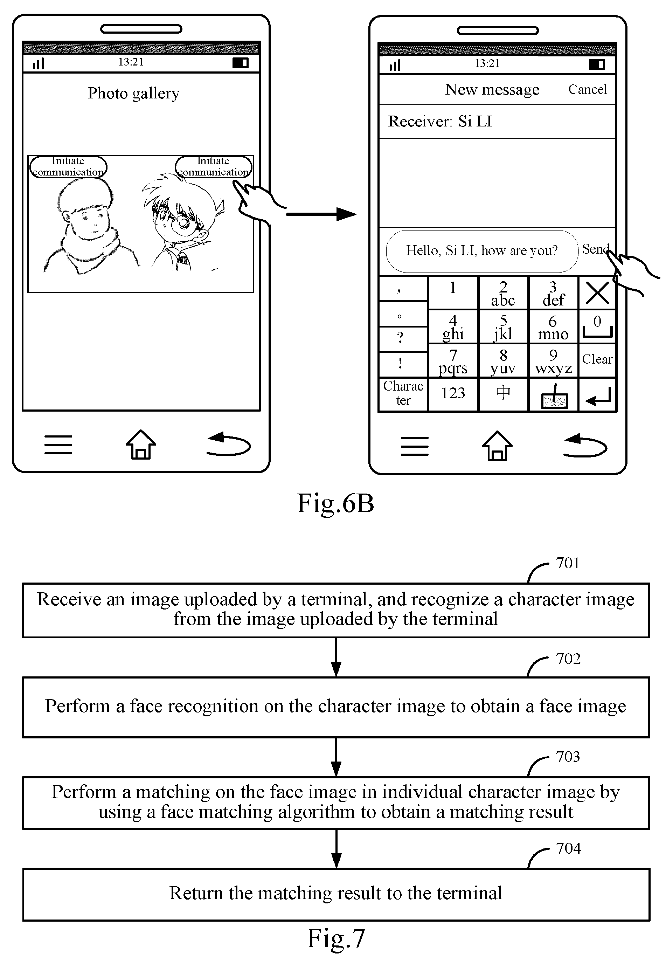

Fig. 6B is a schematic diagram of presenting a target character image, according to the present disclosure. As shown in Fig. 6B, the character image includes two face images, and according to the preset binding record, the two face images are respectively corresponding to San ZHANG and Si LI. The communication option in the present embodiment is set at an upper side of the face image, and when detecting that the communication option is triggered by the user, it is determined that the communication triggering condition is satisfied. According to the preset binding record, the face image at the right side corresponds to Si LI, the contact information thereof includes phone, mail, and MiTalk account, at this time, it may be set by default that the call is initiated via the short message application, or a communication manner selection menu may be outputted on the interface, a plurality of preset communication applications are displayed in the menu, and the user may select his/her needed communication manner to initiate communication with Si LI.

Fig. 7 is a flow chart of another image-based communication method, according to an exemplary embodiment. As shown in Fig. 7, the method may be applied in a server, and includes the following steps.

In step 701, an image uploaded by a terminal is received, and a character image is recognized from the image uploaded by the terminal.

In step 702, a face recognition is performed on the character image to obtain a face image.

In step 703, a matching is performed on the face image in individual character image by using a face matching algorithm to obtain a matching result, wherein the matching result includes one or more different faces, and each face corresponds to the matched face image in one or more character images.

In step 704, the matching result is returned to the terminal such that the terminal configures a corresponding contact and contact information for each face in the matching result to obtain a binding record, determines contact information of a target contact corresponding to the target character image according to the binding record, calls a preset communication application, and initiates communication with the target contact according to the contact information.

The methods in the embodiments of the present disclosure may be applied in the server, the terminal may upload the stored images to the server, and then the server performs the face recognition and the face matching; the procedure of performing the face recognition and the face matching by the server may be referred to the embodiments shown in Fig. 2A, which is not elaborated in the present embodiment. After recognition, the server may return the matching result to the terminal, and the terminal configures the contact and contact information for each face in the matching result, then a binding record in which a corresponding relationship among the character image, the face image, the contact and the contact information is recorded may be obtained.

In the embodiments of the present disclosure, via the server, the character image is screened out, the face image is recognized from the character image, and a face matching is performed on each face image, in this way, the faces of the same contact may correspond to the face images matched in one or more character images, thereby the operating load of the terminal can be reduced, and the terminal can complete the setting procedure of the binding record only by binding contacts for each face, thereby the efficiency of setting the binding record is greatly improved. After binding, the contact information of the target contact corresponding to the target character image may be determined, and by calling a preset communication application, communication with the target contact is initiated according to the contact information.

Corresponding to the above-mentioned embodiments of the image-based communication method, the present disclosure also provides embodiments of an image-based communication device and a terminal to which the device is applied.

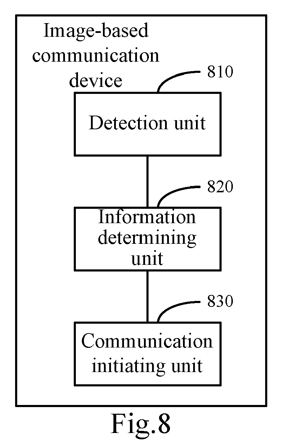

Fig. 8 is a block diagram illustrating an image-based communication device, according to an exemplary embodiment of the present disclosure. As shown in Fig. 8, the device includes: a detection unit 810, an information determining unit 820, and a communication initiating unit 830.

The detection unit 810 is configured to, when presenting a target character image, detect whether a preset communication triggering condition is satisfied.

The information determining unit 820 is configured to, if detecting that the communication triggering condition is satisfied, determine contact information of a target contact corresponding to the target character image according to a preset binding record.

The communication initiating unit 830 is configured to call a preset communication application and initiate communication with the target contact according to the contact information.

It can be known from the above-mentioned embodiments, the contact information of the target contact corresponding to the target character image can be determined by using the preset binding record, thereby the communication application may be called when the preset communication triggering condition is triggered by the user, and communication may be initiated with the target contact according to the contact information. Through the embodiments of the present disclosure, the user may quickly contact with the person in the image when browsing the image, without performing a series of complicated operations of exiting the image browsing application, starting the communication application, finding out the contact and initiating communication, the process is convenient and quick, the user's operations are greatly reduced, and the user experience is good.

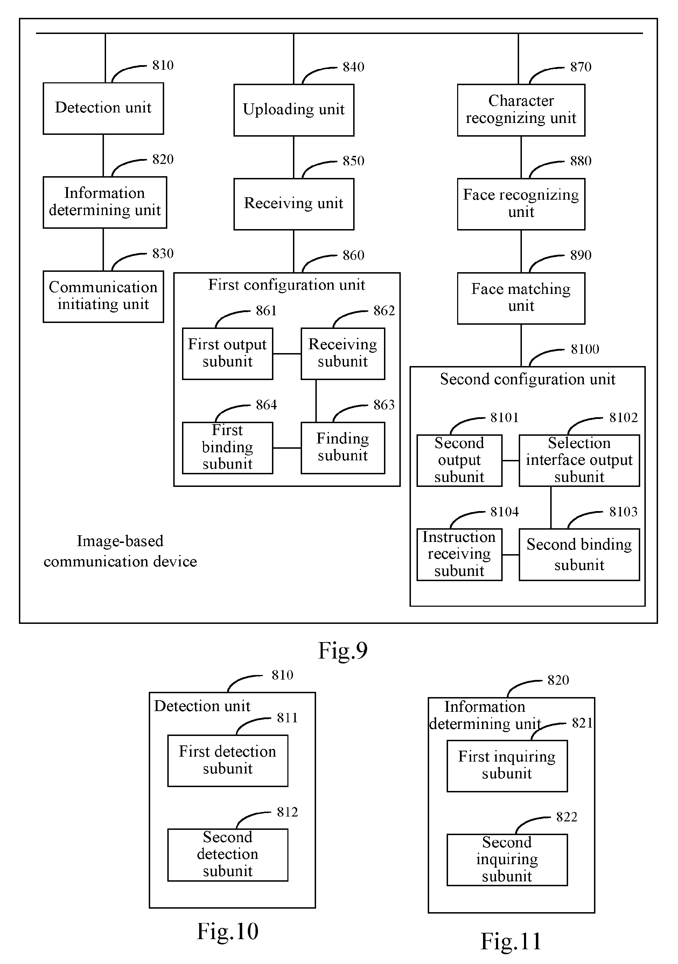

Fig. 9 is a block diagram illustrating another image-based communication device, according to an exemplary embodiment of the present disclosure. As shown in Fig. 9, on the basis of the above-mentioned embodiments shown in Fig. 8, the device includes: an uploading unit 840, a receiving unit 850, and a first configuration unit 860.

The uploading unit 840 is configured to upload an image stored in a terminal to a server.

The receiving unit 850 is configured to receive a character image which is recognized from the image uploaded by the terminal and is returned from the server, perform a face recognition on the character image to obtain a face image, and perform a matching on the face image in individual character image by using a face matching algorithm to obtain a matching result, the matching result including one or more different faces, and each face corresponding to a matched face image in one or more character images.

The first configuration unit 860 is configured to configure a corresponding contact and contact information for each face in the matching result to obtain a binding record in which a corresponding relationship among the character image, the face image, the contact and the contact information is recorded.

It can be known from the above-mentioned embodiments, through the server, the character image is screened out, the face image is recognized from the character image, and a face matching is performed on each face image, in this way, the face of the same contact may correspond to the matched face images in one or more character images, thereby the operating load of the terminal can be reduced, and the terminal can complete the setting procedure of the binding record only by binding contacts for each face, thereby the efficiency of setting the binding record is greatly improved.

In an embodiment, the device may further include: a character recognizing unit 870, a face recognizing unit 880, a face matching unit 890, and a second configuration unit 8100.

The character recognizing unit 870 is configured to recognize a character image from an image stored in a terminal.

The face recognizing unit 880 is configured to perform a face recognition on the character image to obtain a face image.

The face matching unit 890 is configured to perform a matching on the face image in individual character image by using a face matching algorithm to obtain a matching result, wherein the matching result includes a plurality of different faces, and each face is corresponding to a matched face image in one or more character images.

The second configuration unit 8100 is configured to configure a corresponding contact and contact information for each face in the matching result to obtain a binding record in which a corresponding relationship among the character image, the face image, the contact and the contact information is recorded.

It can be known from the above-mentioned embodiments, the character image is recognized from the image stored in the terminal, then the face image is recognized from the character image, and a face matching is performed on each face image, in this way, the face of the same contact may correspond to the matched face images in one or more character images, thereby the setting procedure of the binding record can be completed only by binding contacts for each face, which greatly improves the efficiency of setting the binding record.

In an embodiment, the first configuration unit 860 or the second configuration unit 8100 may include the following subunits. For convenient of illustration, in Fig. 9, explanations are given by taking the first configuration unit 860 as an example. The first configuration unit 860 includes: a first output subunit 861, a receiving subunit 862, a finding subunit 863, and a first binding subunit 864.

The first output subunit 861 is configured to output the matching result.

The receiving subunit 862 is configured to receive an inputted denomination of a target face in the matching result.

The finding subunit 863 is configured to find out a name of a target contact which is the same as the denomination from an address book application, wherein the address book application records therein one or more contacts and contact information thereof.

The first binding subunit 864 is configured to bind a character image and a face image corresponding to the target face with the target contact and contact information thereof so as to obtain the binding record.

It can be known from the above-mentioned embodiments, by denominating each face and associating each face with the contact name in the address book, the user may quickly set the binding record, the setting procedure is quick and convenient, and the user experience is good.

In an embodiment, the first configuration unit 860 or the second configuration unit 8100 may include the following subunits. For convenient of illustration, in Fig. 9, explanations are given by taking the second configuration unit 8100 as an example. The second configuration unit 8100 includes: a second output subunit 8101, a selection interface output subunit 8102, an instruction receiving subunit 8103, and a second binding subunit 8104.

The second output subunit 8101 is configured to output the matching result.

The selection interface output subunit 8102 is configured to, when receiving a binding request for the target face in the matching result, output a contact selection interface, the contact selection interface displaying one or more contacts whose contact information has been recorded in the address book application.

The instruction receiving subunit 8103 is configured to receive a selection instruction to the target contact via the contact selection interface.

The second binding subunit 8104 is configured to bind a character image and a face image corresponding to the target face with the target contact corresponding to the selection instruction and the contact information thereof, so as to obtain the binding record.

It can be known from the above-mentioned embodiments, when the user needs to bind the contact and contact information for the matching result, since the address book has recorded therein one or more contacts and the contact information thereof, the terminal may output the contact selection interface by calling the address book application, then the user may quickly select corresponding contact and contact information for each group of face image via the contact selection interface, such setting procedure is quick and convenient, and the user experience is good.

Fig. 10 is a block diagram illustrating another image-based communication device, according to an exemplary embodiment of the present disclosure. As shown in Fig. 10, on the basis of the above-mentioned embodiments shown in Fig. 8, the detection unit may include any one of the following subunits: a first detection subunit 811, and a second detection subunit 812. For convenient of illustration, the above-mentioned two subunits are simultaneously shown in Fig. 10.

The first detection subunit 811 is configured to detect whether a preset touch event is occurred in a target area of a presenting interface of the target character image, and if yes, determine that the communication triggering condition is satisfied.

The second detection subunit 812 is configured to detect whether a communication option outputted by a presenting interface of the target character image is triggered, and if yes, determine that the communication triggering condition is satisfied.

It can be known from the above-mentioned embodiments, whether the communication triggering condition is satisfied may be determined by detecting whether a preset touch event is occurred in a target area in a presenting interface of the target character image, or by detecting whether a communication option outputted by a presenting interface of the target character image, such detection manner is quick and convenient, and the user experience is good.

Fig. 11 is a block diagram illustrating another image-based communication device, according to an exemplary embodiment of the present disclosure. As shown in Fig. 11, on the basis of the above-mentioned embodiments shown in Fig. 8, the information determining unit 820 may include any one of the following subunits: a first inquiring subunit 821 and a second inquiring subunit 822. For convenient of illustration, the above-mentioned two subunits are simultaneously shown in Fig. 11.

The first inquiring subunit 821 is configured to determine a target face image corresponding to the target area in the target character image, and inquire a target contact corresponding to the target face image and contact information of the target contact from the binding record.

The second inquiring subunit 822 is configured to determine a target face image corresponding to the communication option in the target character image, and inquire a target contact corresponding to the target face image and contact information of the target contact from the binding record.

It can be known from the above-mentioned embodiments, whether the communication triggering condition is satisfied may be determined by detecting whether a preset touch event is occurred in a target area in a presenting interface of the target character image, or by detecting whether a communication option outputted by a presenting interface of the target character image is triggered, and when determining that the communication triggering condition is satisfied, the target face image may be determined, and the contact information of the contact needing to be communicated and triggered by the user may be quickly found out.

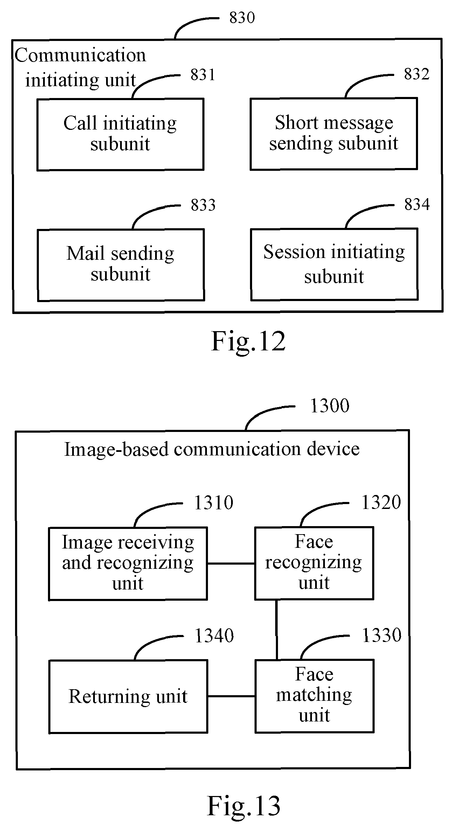

Fig. 12 is a block diagram illustrating another image-based communication device, according to an exemplary embodiment of the present disclosure. As shown in Fig. 12, on the basis of the above-mentioned embodiments shown in Fig. 8, the communication initiating unit 830 may include any one of the following subunits: a call initiating subunit 831, a short message sending subunit 832, a mail sending subunit 833, and a session initiating subunit 834. For convenient of illustration, the above-mentioned four subunits are simultaneously shown in Fig. 12.

The call initiating subunit 831 is configured to call a phone application, and initiate a call to the target contact according to a telephone number of the target contact.

The short message sending subunit 832 is configured to call a short message application, and send a short message to the target contact according to a telephone number of the target contact.

The mail sending subunit 833 is configured to call a mail application, and send an e-mail to the target contact according to a mail address of the target contact.

The session initiating subunit 834 is configured to call an instant messaging application, and initiate an instant messaging session to the target contact according to an instant messaging application account of the target contact.

It can be known from the above-mentioned embodiments, different communication applications may be set in advance in the present disclosure, and when initiating communication with the target contact, there are various communication manners for selection by the user, thereby the user experience is good.

Fig. 13 is a block diagram illustrating another image-based communication device, according to an exemplary embodiment of the present disclosure. As shown in Fig. 13, the device includes: an image receiving and recognizing unit 1310, a face recognizing unit 1320, a face matching unit 1330, and a returning unit 1340.

The image receiving and recognizing unit 1310 is configured to receive an image uploaded by a terminal, and recognize a character image in the image uploaded by the terminal.

The face recognizing unit 1320 is configured to perform a face recognition on the character image to obtain a face image.

The face matching unit 1330 is configured to perform a matching on the face image in individual character image by using a face matching algorithm to obtain a matching result, the matching result including one or more different faces, and each face corresponding to a matched face image in one or more character images.

The returning unit 1340 is configured to return the matching result to the terminal such that the terminal configures a corresponding contact and contact information for each face in the matching result to obtain a binding record, determines contact information of a target contact corresponding to the target character image according to the binding record, calls a preset communication application, and initiates communication with the target contact according to the contact information.

It can be known from the above-mentioned embodiments, through the server, the character image is screened out, the face image is recognized from the character image, and a face matching is performed on each face image, in this way, the operating load of the terminal can be reduced, and the efficiency of setting the binding record is greatly improved. After the complete of the binding, the contact information of the target contact corresponding to the target character image can be determined, and by calling a preset communication application, communication is initiated to the target contact according to the contact information.

With respect to the devices in the above embodiments, the specific manners for performing operations for individual modules therein have been described in detail in the embodiments regarding the methods, which will not be elaborated herein.

For device embodiments, since the device embodiments are substantially corresponding to the method embodiments, the relevant contents may be referred to some explanations in the method embodiments. The device embodiments described above are only illustrative, wherein the units illustrated as separate components may be or may not be separated physically, the component used as a unit display may be or may not be a physical unit, i.e., may be located at one location, or may be distributed into multiple network units. A part or all of the modules may be selected to achieve the purpose of the solution in the present disclosure according to actual requirements. The person skilled in the art can understand and implement the present disclosure without paying inventive labor.

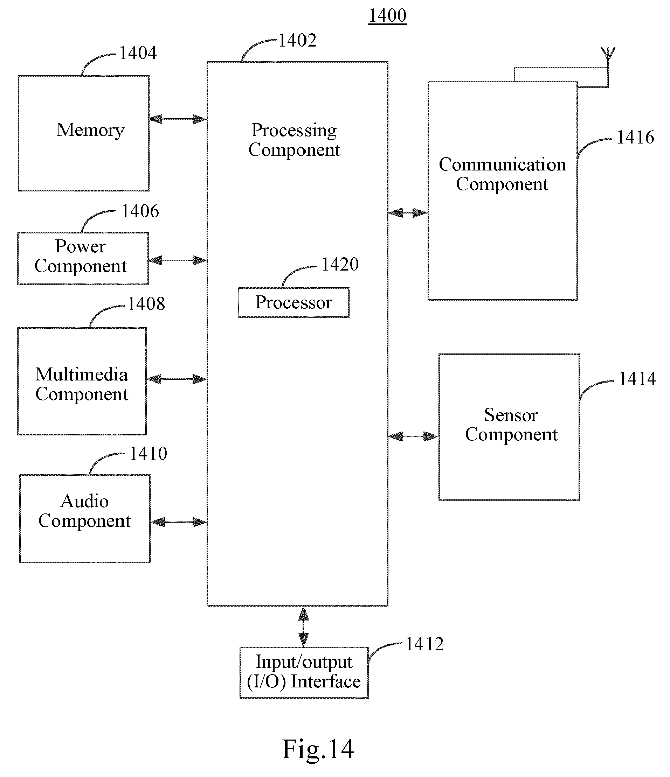

Fig. 14 is a block diagram of a structure applied in an image-based communication device 1400 shown in Fig. 8, according to an exemplary embodiment of the present disclosure. For example, the device 1400 may be a mobile phone having a routing function, a computer, a digital broadcast terminal, a messaging device, a gaming console, a tablet, a medical device, exercise equipment, a personal digital assistant, and the like.

Referring to Fig. 14, the device 1400 may include one or more of the following components: a processing component 1402, a memory 1404, a power component 1406, a multimedia component 1408, an audio component 1410, an input/output (I/O) interface 1412, a sensor component 1414, and a communication component 1416.

The processing component 1402 typically controls overall operations of the device 1400, such as the operations associated with display, telephone calls, data communications, camera operations, and recording operations. The processing component 1402 may include one or more processors 1420 to execute instructions to perform all or part of the steps in the above described methods. Moreover, the processing component 1402 may include one or more modules which facilitate the interaction between the processing component 1402 and other components. For instance, the processing component 1402 may include a multimedia module to facilitate the interaction between the multimedia component 1408 and the processing component 1402.

The memory 1404 is configured to store various types of data to support the operation of the device 1400. Examples of such data include instructions for any applications or methods operated on the device 1400, contact data, phonebook data, messages, pictures, video, etc. The memory 1404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1406 provides power to various components of the device 1400. The power component 1406 may include a power management system, one or more power sources, and any other components associated with the generation, management, and distribution of power in the device 1400.

The multimedia component 1408 includes a screen providing an output interface between the device 1400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1408 includes a front camera and/or a rear camera. The front camera and the rear camera may receive an external multimedia datum while the device 1400 is in an operation mode, such as a photographing mode or a video mode. Each of the front camera and the rear camera may be a fixed optical lens system or have focus and optical zoom capability.

The audio component 1410 is configured to output and/or input audio signals. For example, the audio component 1410 includes a microphone ("MIC") configured to receive an external audio signal when the device 1400 is in an operation mode, such as a call mode, a recording mode, and a voice recognition mode. The received audio signal may be further stored in the memory 1404 or transmitted via the communication component 1416. In some embodiments, the audio component 1410 further includes a speaker to output audio signals.

The I/O interface 1412 provides an interface between the processing component 1402 and peripheral interface modules, such as a keyboard, a click wheel, buttons, and the like. The buttons may include, but are not limited to, a home button, a volume button, a starting button, and a locking button.

The sensor component 1414 includes one or more sensors to provide status assessments of various aspects of the device 1400. For instance, the sensor component 1414 may detect an open/closed status of the device 1400, relative positioning of components, e.g., the display and the keypad, of the device 1400, a change in position of the device 1400 or a component of the device 1400, a presence or absence of user contact with the device 1400, an orientation or an acceleration/deceleration of the device 1400, and a change in temperature of the device 1400. The sensor component 1414 may include a proximity sensor configured to detect the presence of nearby objects without any physical contact. The sensor component 1414 may also include a light sensor, such as a CMOS or CCD image sensor, for use in imaging applications. In some embodiments, the sensor component 1414 may also include an accelerometer sensor, a gyroscope sensor, a magnetic sensor, a pressure sensor, or a temperature sensor.

The communication component 1416 is configured to facilitate communication, wired or wirelessly, between the device 1400 and other devices. The device 1400 can access a wireless network based on a communication standard, such as WiFi, 2G, or 3G, or a combination thereof. In one exemplary embodiment, the communication component 1416 receives a broadcast signal or broadcast associated information from an external broadcast management system via a broadcast channel. In one exemplary embodiment, the communication component 1416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1404, executable by the processor 1420 in the device 1400, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when instructions in the storage medium is executed by a processor of the mobile terminal, enables the terminal device to perform the an image-based communication method, the method including: when presenting a target character image, detecting whether a preset communication triggering condition is satisfied; if detecting that the communication triggering condition is satisfied, determining contact information of a target contact corresponding to the target character image according to a preset binding record; and initiating communication with the target contact according to the contact information by calling a preset communication application.

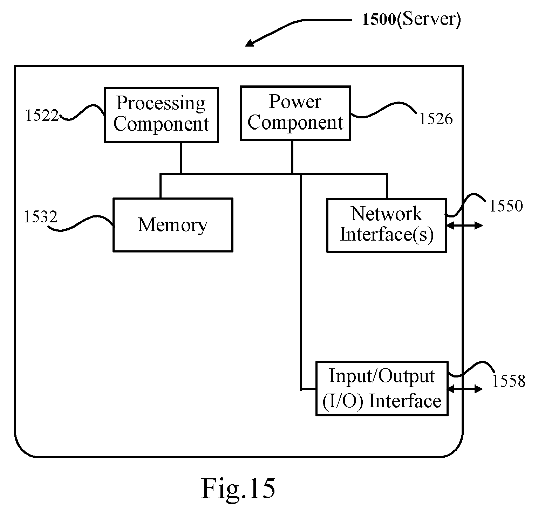

FIG. 15 is a block diagram of an image-based communication device 1500, according to an exemplary embodiment. For example, the device 1500 may be provided as a server. Referring to FIG. 15, the device 1500 includes a processing component 1522 that further includes one or more processors, and memory resources represented by a memory 1532 for storing instructions executable by the processing component 1522, such as application programs. The application programs stored in the memory 1532 may include one or more modules each corresponding to a set of instructions. Further, the processing component 1522 is configured to execute the instructions to perform the above method.

The device 1500 may also include a power component 1526 configured to perform power management of the device 1500, wired or wireless network interface(s) 1550 configured to connect the device 1500 to a network, and an input/output (I/O) interface 1558. The device 1500 may operate based on an operating system stored in the memory 1532, such as Windows Server^{™}, Mac OS X^{™}, Unix^{™}, Linux^{™}, FreeBSD^{™}, or the like.

## Claims

1. An image-based communication method, comprising:
when presenting a target character image, detecting (101) whether a preset communication triggering condition is satisfied;
if detecting that the communication triggering condition is satisfied, determining (102) contact information of a target contact corresponding to the target character image according to a preset binding record; and
initiating (103, 503, 603) communication with the target contact according to the contact information by calling a preset communication application.

2. The method of claim 1, further comprising:
uploading one or more images stored in a terminal to a server;
receiving one or more character images which are recognized (201) from the images uploaded by the terminal and which are returned from the server, performing (202) face recognition on the character images to obtain one or more face images, and performing (203) matching on the face images in each character image by using a face matching algorithm to obtain a matching result, the matching result comprising one or more different matched faces, and each face corresponding to the matched face image in one or more character images; and
configuring (204) a corresponding contact and contact information for each face in the matching result to obtain a binding record in which a corresponding relationship among the character image, the face image, the contact and the contact information is recorded.

3. The method of claim 1, further comprising:
recognizing (201) one or more character images from one or more images stored in a terminal;
performing (202) face recognition on the one or more character images to obtain one or more face images;
performing (203) matching on the face images in each character images by using a face matching algorithm to obtain a matching result, wherein the matching result comprises a plurality of different matched faces, and each face corresponds to the matched face images in one or more character images; and
configuring (204) a corresponding contact and contact information for each face in the matching result to obtain a binding record in which a corresponding relationship among the character image, the face image, the contact and the contact information is recorded.

4. The method of claim 2 or 3, wherein the configuring (204) the corresponding contact and contact information for each face in the matching result to obtain the binding record in which the corresponding relationship among the character image, the face image, the contact and the contact information is recorded comprises:
outputting (301) the matching result;
receiving (302) an inputted denomination of a target face in the matching result;
finding out (303) a name of a target contact which is the same as the denomination from an address book application, wherein the address book application records therein one or more contacts and contact information thereof; and
binding (304) a character image and a face image corresponding to the target face with the target contact and the contact information thereof so as to obtain the binding record.

5. The method of claim 2 or 3, wherein configuring (204) the corresponding contact and contact information for each face in the matching result to obtain the binding record in which the corresponding relationship among the character image, the face image, the contact and the contact information is recorded comprises:
outputting (401) the matching result;
when receiving a binding request for the target face in the matching result, outputting (402) a contact selection interface, the contact selection interface displaying one or more contacts whose contact information has been recorded in an address book application;
receiving (403) a selection instruction to the target contact via the contact selection interface; and
binding (404) a character image and a face image corresponding to the target face with the target contact corresponding to the selection instruction and the contact information thereof, so as to obtain the binding record.

6. The method of claim 2 or 3, wherein the detecting (101) whether the preset communication triggering condition is satisfied comprises:
detecting whether a preset touch event is occurred in a target area of a presenting interface of the target character image, and if yes, determining that the communication triggering condition is satisfied (501); or
detecting whether a communication option outputted by a presenting interface of the target character image is triggered, and if yes, determining that the communication triggering condition is satisfied (601).

7. The method of claim 6, wherein the determining (102) the contact information of the target contact corresponding to the target character image according the preset binding record comprises:
determining a target face image corresponding to the target area in the target character image, and inquiring a target contact corresponding to the target face image and contact information of the target contact from the binding record (502); or
determining a target face image corresponding to the communication option in the target character image, and inquiring a target contact corresponding to the target face image and contact information of the target contact from the binding record (602).

8. The method of any preceding claim, wherein the initiating (103, 503, 603) communication with the target contact according to the contact information by calling the preset communication application comprises:
calling a phone application, and initiating a call to the target contact according to a telephone number of the target contact; or
calling a short message application, and sending a short message to the target contact according to a telephone number of the target contact; or
calling a mail application, and sending an e-mail to the target contact according to a mail address of the target contact; or
calling an instant messaging application, and initiating an instant messaging session to the target contact according to an instant messaging application account of the target contact.

9. An image-based communication method, comprising:
receiving an image uploaded by a terminal, and recognizing a character image from the image uploaded by the terminal (701);
performing (702) face recognition on the character image to obtain a face image;
performing (703) matching on the face image in an individual character image by using a face matching algorithm to obtain a matching result, the matching result comprising one or more different faces, and each face corresponding to the matched face image in one or more character images; and
returning (704) the matching result to the terminal such that the terminal configures a corresponding contact and contact information for each face in the matching result to obtain a binding record, determines contact information of a target contact corresponding to the target character image according to the binding record, calls a preset communication application, and initiates communication with the target contact according to the contact information.

10. An image-based communication device, comprising:
a detection unit (810) configured to, when presenting a target character image, detect whether a preset communication triggering condition is satisfied;
an information determining unit (820) configured to, if detecting that the communication triggering condition is satisfied, determine contact information of a target contact corresponding to the target character image according to a preset binding record; and
a communication initiating unit (830) configured to call a preset communication application and initiate communication with the target contact according to the contact information.

11. The device of claim 10, further comprising:
an uploading unit (840) configured to upload an image stored in a terminal to a server;
a receiving unit (850) configured to receive a character image which is recognized from the image uploaded by the terminal and is returned from the server, perform a face recognition on the character image to obtain a face image, and perform a matching on the face image in individual character image by using a face matching algorithm to obtain a matching result, the matching result comprising one or more different faces, and each face corresponding to the matched face image in one or more character images; and
a first configuration unit (860) configured to configure a corresponding contact and contact information for each face in the matching result to obtain a binding record in which a corresponding relationship among the character image, the face image, the contact and the contact information is recorded.

12. The device of claim 10, further comprising:
a character recognizing unit (870) configured to recognize a character image from an image stored in a terminal;
a face recognizing unit (880) configured to perform a face recognition on the character image to obtain a face image;
a face matching unit (890) configured to perform matching on the face image in an individual character image by using a face matching algorithm to obtain a matching result, wherein the matching result comprises a plurality of different faces, and each face is corresponding to the matched face image in one or more character images; and
a second configuration unit (810)0 configured to configure a corresponding contact and contact information for each face in the matching result to obtain a binding record in which a corresponding relationship among the character image, the face image, the contact and the contact information is recorded.

13. The device of claim 11 or 12, wherein the detection unit (810) comprises any one of the following subunits:
a first detection subunit (811) configured to detect whether a preset touch event is occurred in a target area of a presenting interface of the target character image, and if yes, determine that the communication triggering condition is satisfied; and
a second detection subunit (812) configured to detect whether a communication option outputted by a presenting interface of the target character image is triggered, and if yes, determine that the communication triggering condition is satisfied.

14. The device of claim 13, wherein the information determining unit (820) comprises any one of the following subunits:
a first inquiring subunit (821) configured to determine a target face image corresponding to the target area in the target character image, and inquire a target contact corresponding to the target face image and contact information of the target contact from the binding record; and
a second inquiring subunit (822) configured to determine a target face image corresponding to the communication option in the target character image, and inquire a target contact corresponding to the target face image and contact information of the target contact from the binding record.

15. An image-based communication device (1300), comprising:
an image receiving and recognizing unit (1310) configured to receive an image uploaded by a terminal, and recognize a character image from the image uploaded by the terminal;
a face recognizing unit (1320) configured to perform a face recognition on the character
image to obtain a face image;
a face matching unit (1330) configured to perform a matching on the face image in individual character image by using a face matching algorithm to obtain a matching result, the matching result comprising one or more different faces, and each face corresponding to the matched face image in one or more character images; and
a returning unit (1340) configured to return the matching result to the terminal such that the terminal configures a corresponding contact and contact information for each face in the matching result to obtain a binding record, determines contact information of a target contact corresponding to the target character image according to the binding record, calls a preset communication application, and initiates communication with the target contact according to the contact information.
